(19) Europäisches Patentamt
European Patent Office
Office européen des brevets

(11) EP 0 520 585 B1

(12) EUROPEAN PATENT SPECIFICATION

(45) Date of publication and mention of the grant of the patent:
**27.03.1996 Bulletin 1996/13**

(51) Int. Cl.$^6$: **A01N 37/38**

(21) Application number: **92201900.5**

(22) Date of filing: **25.06.1992**

(54) **Fungicidal compositions**

Fungizide Zusammensetzungen

Compositions fongicides

(84) Designated Contracting States:
**AT BE CH DE DK ES FR GB GR IT LI LU NL PT SE**

(30) Priority: **28.06.1991 GB 9114004**

(43) Date of publication of application:
**30.12.1992 Bulletin 1992/53**

(73) Proprietor: **SHELL INTERNATIONALE RESEARCH MAATSCHAPPIJ B.V.**
**NL-2596 HR Den Haag (NL)**

(72) Inventor: **Grayson, Basil Terence**
**Canterbury, Kent CT2 7BB (GB)**

(74) Representative: **Allam, Peter Clerk et al**
**LLOYD WISE, TREGEAR & CO.,**
**Commonwealth House,**
**1-19 New Oxford Street**
**London WC1A 1LW (GB)**

(56) References cited:
**EP-A- 0 120 321**
**EP-A- 0 219 756**
**EP-A- 0 280 348**
**FR-A- 2 623 974**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 520 585 B1

## Description

The invention relates to fungicidal compositions, to their use in combating undesired fungal organisms, and to their preparation.

The invention concerns, in particular, novel fungicidal compositions which incorporate a compound of general formula:

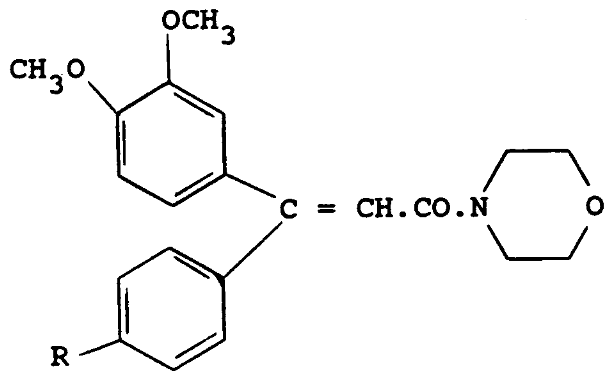

(I)

where R represents a halogen atom, an alkyl group or a halophenoxy group.

Compounds of general formula I and their fungicidal utility are disclosed in EP-A-120321 and/or EP-A-219756.

It has now been discovered that the fungicidal activity of compounds of general formula I is enhanced to a surprising and significant extent by the co-application to a plant to be treated, of an adjuvant selected from a particular class, namely aliphatic alcohol alkoxylates. Testing has revealed that, whilst adjuvants of various classes cause some enhancement of activity, the enhancement of activity caused by aliphatic alcohol alkoxylates is particularly interesting. The aliphatic alcohol alkoxylates as a class appear, surprisingly, to stand apart from other adjuvants, providing very high enhancement of activity.

In accordance with a first aspect of the present invention, there is provided a method of combating a fungus at a locus, which method comprises treating the locus with a composition which comprises a compound of general formula I and an aliphatic alcohol alkoxylate or an alkyl-terminated aliphatic alcohol alkoxylate.

In the method according to the invention, the locus may be an agricultural or horticultural locus, for example, plants subject to fungal attack, seeds of such plants or the medium in which plants are growing or are to be grown. The method may comprise combating a fungus already present at a locus and/or prophylactic fungicidal treatment at a locus. Preferably, the method according to the invention involves the foliar treatment of plants with the composition. The plants may suitably be vines because of the high level of control achieved by the method of the invention against the fungus Plasmopara viticola on vines. Alternatively, the plants may suitably be potato plants because of the high level of control achieved by the method of the invention against the fungus Phytophthora infestans on potato plants.

Preferably, the method of the invention comprises treating the locus with an aqueous composition which comprises a compound of general formula I and a free or alkyl-terminated aliphatic alcohol alkoxylate.

A preferred alkoxylate of an aliphatic alcohol is based on alkoxy units having 2 carbon atoms, thus being an ethoxylate, or 2 and 3 carbon atoms, thus being a mixed ethoxylate/propoxylate. An ethoxylate is preferred. Such alcohol alkoxylates are available from various sources or may be prepared by alkoxylating a suitable aliphatic alcohol under known conditions.

In preferred aliphatic alcohol alkoxylates for use in the present invention, the alkoxylate chain may have at least 2 alkoxy moieties, suitably from 2 to 25 alkoxy moieties, preferably from 2 to 15, and most preferably from 2 to 9.

Suitable alcohol moieties have from 8 to 25 carbon atoms, excluding the alkoxylate and any alkyl terminating groups. In preferred alcohol alkoxylates whether in free form or in alkyl-terminated form, for use in the present invention, the alcohol moiety is derived from a $C_{8-20}$ aliphatic alcohol. As is well known, such alcohols are normally available in the form of mixtures. However, it may be stated that, in the context of the present invention, preferred alcohols are primary or predominantly primary, straight-chain or branched-chain, alcohols and/or having one hydroxy group, or predominantly one hydroxy group. They may be saturated or unsaturated but the highest activity has been shown by saturated alcohol alkoxylates, or alcohol alkoxylates in which saturated alcohol moieties predominate. The terms "predominate" and "predominantly" denote "more than 50% by weight" and, preferably, "more than 80% by weight".

For alkyl-terminated alcohol alkoxylate, the terminal alkyl moiety may be linear or branched and suitably have up to 10, preferably up to 6, most preferably up to 4 carbon atoms. An alkoxylated alcohol terminated with a butyl group has been found to give useful results.

Good results have been obtained using alcohol alkoxylates in which the alcohol is of vegetable or animal oil origin but encouraging results have been obtained using alcohol alkoxylates in which the alcohol is of mineral oil origin.

In the method of the invention, the presence of a free or alkyl-terminated aliphatic alcohol alkoxylate may substantially reduce the quantity of a compound of general formula I which needs to be applied to a locus to obtain a given level of activity. In practice, a compound of general formula I may suitably be applied to a locus in an amount in the range of from 20 to 600 g/ha, preferably 50 to 300 g/ha. The adjuvant may suitably be applied to a locus in an amount in the range of from 80 to 2000 g/ha, preferably 300 to 1500 g/ha.

Whilst a composition comprising a free or alkyl-terminated aliphatic alcohol alkoxylate and a compound of general formula I may have other fungicidal indications, it is likely to be of primary benefit for therapeutic foliar applications. Prophylactic activity can be enhanced by co-application of a further fungicidal compound, a suitable example being mancozeb. Preliminary tests have indicated that mancozeb does not appear to depress the enhancement effect which the alkoxylate adjuvant has on a compound of general formula I. Mancozeb, when co-applied, may suitably be co-applied in an amount in the range of from 20 to 600 g/ha, preferably 50 to 300 g/ha.

It may be desirable to co-apply further compound(s) to a said locus, for example an insecticide, acaricide, herbicide or nematocide, or a fertilizer.

In accordance with a further aspect of the present invention, there is provided an aqueous composition for use in the method of the invention, to be applied to a said locus. Such a composition may be prepared by mixing a free or alkyl-terminated aliphatic alcohol alkoxylate and a composition containing a compound of general formula I, taken from separate sources, in water in a tank; or, preferably, by adding, to water in a tank, a pre-mixed "one-pack" formulation containing both alkoxylate and a compound of general formula I. Such a pre-mixed formulation may most conveniently be a liquid or a wettable powder, the manufacture of each of which is entirely standard.

A liquid "one-pack" formulation for dilution with water suitably comprises a compound of general formula I, a free or alkyl-terminated aliphatic alcohol alkoxylate, an emulsifier and a solvent. A useful formulation solvent for compounds of general formula I, as indeed it has been found to be for other crop protection agents, is benzyl alcohol.

A solid "one-pack" formulation suitably comprises a compound of general formula I, a free or alkyl-terminated aliphatic alcohol alkoxylate, a wetting agent to aid dispersion and a filler, for example kaolin.

An antifoaming agent may be employed, if desired, in accordance with standard practice. An antifoaming agent may be a constituent of a "one-pack" formulation. When the aqueous composition is to be prepared by mixing a free or alkyl-terminated aliphatic alcohol alkoxylate, and a composition containing a compound of general formula I in a tank, and an antifoamer is desired, the antifoamer may conveniently be formulated with the alkoxylate component.

The concentration of the components in the aqueous composition may be calculated from the amount of a compound of general formula I and of alkoxylate it is desired to supply, and the rate of application of the composition. Typically the rate of application may be from 200 to 2000 l/ha. Thus, when the rate of application of the composition is to be 1000 l/ha, and that of a compound of general formula I and of the alkoxylate, 100 g/ha and 400 g/ha, respectively, the aqueous composition will contain 0.1 g/l of a compound of general formula I and 0.4 g/l of alkoxylate. Generally, the aqueous composition may contain from 0.01 to 3.0 g/l of a compound of general formula I and from 0.04 to 10 g/l alkoxylate.

In accordance with a further aspect of the present invention, there is provided a concentrate formulation containing a free or alkyl-terminated aliphatic alcohol alkoxylate and of a compound of general formula I, for dispersion or dissolution in water. Such a concentrate formulation may suitably contain from 5 to 200 g/kg of a compound of general formula I and from 100 to 500 g/kg of adjuvant, the balance of the concentrate formulation being the usual types of further materials.

Unless otherwise specified in this specification, an alkyl group R may be branched or, preferably, linear and suitably contains up to 10, preferably up to 6, and most preferably up to 4, carbon atoms.

Unless otherwise stated in this specification, a halogen atom R may be a fluorine, chlorine, bromine or iodine atom.

The group R as a halophenoxy group may suitably have from 1 to 3 halogen, preferably chlorine, substituents. Suitably it has only one halogen substituent, preferably para-located. A preferred halophenoxy group is 4-chlorophenoxy.

The group R may suitably represent a straight-chain $C_{1-4}$ alkyl group, preferably n-butyl.

Most preferably, the group R represents a chlorine atom. A compound of general formula I in which R represents a chlorine atom, disclosed as Example 132 in EP-A-120321, has the common chemical name dimethomorph, which will hereafter be used to denote it.

It will, of course, be appreciated that other compounds of a similar chemical structure to the compounds of general formula I, such as other compounds disclosed in EP-A-120 321 and EP-A-219 756 and the compounds disclosed in EP-A-360 701, may suitably form the active component of fungicidal compositions which contain aliphatic alcohol alkoxylates or alkyl-terminated aliphatic alcohol alkoxylates as hereinbefore described.

The invention will now be further described with reference to the accompanying Examples.

Example 1

a) Materials

The following wettable powder (WP) and emulsifiable concentrate (EC) formulations of a compound of general formula I were prepared, the WP by air milling the ingredients together to obtain an average particle size of around 5 µm, and the EC by dissolving the compound of general formula I in a solution of the benzyl alcohol, surfactants and part of the SOLVESSO and, after complete dissolution of the compound of general formula I, adding the rest of the SOLVESSO.

| Wettable powder | Emulsifiable concentrate |
|---|---|
| Dimethomorph 500 g | Dimethomorph 100 g |
| BORROSPERSE CA 80 g | ATLOX 4851B 20 g |
| SUPRAGIL WP 20 g | ATLOX 4855B 20 g |
| Kaolin 400 g | MARLOWET 5314 40 g |
| | Benzyl alcohol 550 g |
| | SOLVESSO 150 to 1 1 |

BORROSPERSE CA is a calcium lignosulphate available from Borregard. COLLEX BX powder, a calcium lignosulphate available from Lignin-Chemie, would also be suitable.
SUPRAGIL WP is a sodium-diisoalkylnaphthalenesulphonate available from Rhone-Poulenc. Nekal BX trocken, available from BASF, would also be suitable as this component.
Kaolin is available as ARGIREC B 24 from Blanc Mineraux de Paris or as CHINAFILL KI powder from Gesellschaft für Rohstoffveredelung ATLOX 4851B and ATLOX 4855B are calcium alkylarylsulphonate, nonionic emulsifiers available from ICI.
MARLOWET 5314 is a $C_{12}/C_{14}$-ethoxylated, phosphated fatty alcohol available from Hüls.
SOLVESSO 150 is a $C_{10}/C_{11}$ alkylbenzene available from Esso Chemie.

The following adjuvants were obtained:
ATPLUS 411F (mineral oil adjuvant) and ATPLUS 412 (rape seed oil adjuvant) from ICI. ATPLUS 412 had been identified in previous tests as being the best adjuvant for dimethomorph, out of ATPLUS 412, ARMOBLEN 557 (alkylamine ethoxylate/propoxylate), FRIGATE (tallowamine ethoxylate) and AEROSOL OTB (sodium sulphosuccinate). $C_{13}/_{14}$ (ratio c.55/45) alcohol ethoxylate adjuvants MARLIPAL 34/6EO, MARLIPAL 34/11EO and MARLIPAL 34/20EO (having on average 6, 11 and 20 ethylene oxide units per molecule, respectively), from Hüls.

b) Plants

Vine plants (Vitus vinifera cv Cabernet Sauvignon) were propagated from woody cuttings and grown to the 5/6th leaf stage using sub-irrigation under glasshouse conditions (temperature, 20 to 55 °C; illumination, 16 h photoperiod of daylight supplemented by mercury vapour lighting). The apex and the top immature leaf was removed before inoculation of the undersides of the top two leaves by spraying with a freshly prepared suspension of Plasmopara viticola (downy mildew). After inoculation, the plants were transferred to a high humidity chamber for 24 h and then returned to a high humidity glasshouse for a further 24 h before spraying.

c) Preparation and application of spray solutions

Amounts (1.6, 0.8, 0.4, 0.2, 0.1, 0 g) of the WP formulation and volumes (8, 4, 2, 1, 0.5, 0 ml) of the EC formulation were each dispersed in tap water (250 ml). An amount of each adjuvant (surfactants, 3.0 g; emulsified oils, 6.0 g) was dispersed in tap water (500 ml). An aliquot (20 ml) of each dimethomorph dispersion was mixed with an aliquot (20 ml) of each adjuvant solution immediately prior to spraying to give an array of 36 solutions for each formulation type.

Each of these solutions was sprayed onto four vine plants at a nominal volume rate equivalent to 250 l/ha using a laboratory track sprayer equipped with a 800067 hydraulic nozzle (Spraying Systems Co., Illinois) operating at 276 kPa. These treatments were equivalent to dimethomorph application rates of 400, 200, 100, 50, 25, 0 g/ha either without or with adjuvant at an application rate of either 750 g/ha (surfactant) or 1500 g/ha (emulsified oil).

d) Plant treatment and assessment

The spray deposits were allowed to dry and the plants returned to glasshouse conditions, as described for their propagation, for 4 days. They were then transferred to a high humidity chamber for 24 h incorporating a dark period of 8 h to induce sporulation. Each inoculated leaf was asssayed for degree of infection by visual assessments of the % area of leaf covered by sporulating lesions.

Statistical analysis of differences between treatments was done by comparing the infection at each dose of dimethomorph with 5% of the infection for untreated plants. The estimate of this difference (and standard error) was measured on the logistic scale:

$$D_T = \log \frac{(I_T - I_C/20)}{100 - (I_T - I_C/20)}$$

where

- $I_T$ represents estimated infection for treatment
- $I_C$ represents estimated infection for control
- $D_T$ represents the difference between treatment and control.

A one-sided t-test of whether this difference exceeds zero was performed (at the 5% significance level). In this way, it was possible to identify the lowest dose of dimethomorph at which a given treatment reduced infection by at least 95%.

e) Results

Tables 1 and 2 contain the mean results and standard deviations (SD) of the two independent assessments on the four pairs of leaves inoculated and sprayed for each treatment.

It will be observed that, whilst the oil adjuvants ATPLUS 411F and ATPLUS 412 give some enhancement in activity, the improvements in performance brought about by the three C13/C14 alcohol ethoxylates on both types of formulation (Tables 1 and 2) were dramatic and statistically significant. The analysis described above indicated that the dose rates of both the EC and the WP formulations with the alcohol ethoxylates could be reduced to less than 25 g/ha of dimethomorph whilst still achieving greater than 95% control on glasshouse grown plants.

It was observed that there was some slight necrotic spotting of the leaves with the Marlipal 34/11EO treatments, though not with Marlipal 34/6EO or /20EO applications.

Table 1

| Effect of adjuvants on the control of Plasmopara viticola on vines with the WP formulation | | | | | | |
|---|---|---|---|---|---|---|
| ADJUVANT (SPRAY TANK CONC) | % LEAF AREA INFECTED (SD) | | | | | |
| | dimethomorph application rate g/ha | | | | | |
| | 0 | 25 | 50 | 100 | 200 | 400 |
| NONE | 56 (28) | 58 (38) | 60 (31) | 66 (18) | 73 (16) | 82 (11) |
| ATPLUS 412 (6 g/l) | 91 (6) | 42 (21) | 28 (20) | 26 (22) | 34 (26) | 37 (21) |
| ATPLUS 411F (6 g/l) | 82 (5) | 14 (15) | 14 (19) | 38 (31) | 41 (17) | 46 (30) |
| MARLIPAL 34/6EO (3 g/l) | 90 (11) | 1 (1) | 1 (1) | 0 (1) | 0 (1) | 0 (1) |
| MARLIPAL 34/11EO (3 g/l) | 57 (32) | 1 (2) | 2 (2) | 2 (2) | 1 (1) | 0 (0) |
| MARLIPAL 34/20EO (3 g/l) | 70 (15) | 3 (5) | 0 (0) | 0 (1) | 1 (1) | 2 (2) |

Table 2

| Effect of adjuvants on the control of Plasmopara viticola on vines with the EC formulation | | | | | | |
|---|---|---|---|---|---|---|
| ADJUVANT (SPRAY TANK CONC) | % LEAF AREA INFECTED (SD) | | | | | |
| | dimethomorph application rate g/ha | | | | | |
| | 0 | 25 | 50 | 100 | 200 | 400 |
| NONE | 96 (2) | 86 (11) | 80 (17) | 25 (21) | 29 (10) | 8 (6) |
| ATPLUS 412 (6 g/l) | 73 (24) | 47 (30) | 22 (16) | 21 (14) | 11 (11) | 3 (3) |
| ATPLUS 411F (6 g/l) | 75 (4) | 11 (8) | 9 (5) | 30 (20) | 10 (13) | 4 (3) |
| MARLIPAL 34/6EO (3 g/l) | 95 (5) | 0 (1) | 0 (1) | 0 (1) | 0 (0) | 0 (0) |
| MARLIPAL 34/11EO (3 g/l) | 80 (4) | 1 (1) | 2 (1) | 2 (3) | 0 (0) | 0 (1) |
| MARLIPAL 34/20EO (3 g/l) | 29 (16) | 0 (1) | 2 (2) | 1 (1) | 0 (0) | 0 (0) |

Example 2

The starting EC composition as described in Example 1 was used.

The adjuvants used were:

MARLIPAL 34/6EO- as described above

GENAPOL C-050 - an adjuvant from Hoechst in which the alcohol moiety is derived from coconut oil, and the ethoxylate moiety has an average 5 ethylene oxide units per molecule.

Alcohols derived from coconut oil typically comprise the following components (ref. E. W. Eckey "Vegetable Fat & Oils", published by Reinhold Publishing Corp. 1954, N.Y.)

| | |
|---|---|
| caprylic | (C8) - 9.0 % |
| capric | (C10) - 6.8 % |
| lauric | (C12) - 46.4 % |
| myristic | (C14) - 18.0 % |
| palmitic | (C16) - 9.0 % |

GENAPOL C-080 - as GENAPOL C-050 but having on average 8 ethylene oxide units per molecule

SILWET L 77 - an alkoxylated dimethylpolysiloxane adjuvant available from Union Carbide.

The general procedures and assessment were as described in Example 1.

Outdoor "hardened" vines were propagated initially under glasshouse conditions up to the 3/4 leaf stage, and then gradually "hardened off" under polythene tunnel conditions over 3 to 4 days before being transferred to outdoor conditions for about 1 week (mean air temperatures: April, 8°C; May, 12.3°C). During these latter stages a further 1 to 2 leaves developed. Plants were inoculated, incubated, sprayed and held under glasshouse conditions, as defined in Example 1, to allow the disease to propagate over 4 days before being transferred to high humidity dark conditions to induce sporulation.

Trials were conducted on three occasions assessing the effects of varying adjuvant type and concentration:

| | | |
|---|---|---|
| Trial 1, | MARLIPAL 34/6EO | 0, 94, 187, 375, 750, 1500 g/ha |
| Trial 2, | GENAPOL C-050 | 0, 94, 187, 375, 750, 1500 g/ha |
| Trial 3, | GENAPOL C-050 | 0, 187, 375 g/ha |
| | GENAPOL C-080 | 0, 94, 197, 375, 750 g/ha |
| | SILWET L77 | 0, 94, 187, 375, 750 g/ha. |

The results are set out in Tables 3 to 7 below. Clearly, all the adjuvants gave enhancement to the performance of the dimethomorph EC on these "outdoor hardened" vines, confirming the previous results of Example 1 on glasshouse propagated vines. However, Trial 3 indicated that the GENAPOL adjuvants gave greater enhancement than SILWET L77. Of the GENAPOL surfactants, GENAPOL C-080 appeared the more effective.

Table 3

| **Effect of MARLIPAL 6EO on the performance of dimethomorph EC against P. viticola on "outdoor hardened" vines (Trial 1)** | | | | | | |
|---|---|---|---|---|---|---|
| ADJUVANT MARLIPAL 34/6EO CONCENTRATION g/ha | % LEAF AREA OF SPORULATING LESIONS (SD) | | | | | |
| | dimethomorph application rate g/ha | | | | | |
| | 0 | 6.3 | 12.5 | 25 | 50 | 100 |
| 0 | 15 (4) | 22 (16) | 22 (16) | 22 (8) | 29 (19) | 19 (7) |
| 94 | 22 (11) | 8 (6) | 3 (2) | 6 (13) | 6 (8) | 5 (3) |
| 187 | 47 (30) | 8 (6) | 6 (3) | 4 (3) | 7 (7) | 4 (3) |
| 375 | 8 (5) | 5 (4) | 4 (6) | 1 (1) | 3 (3) | 1 (2) |
| 750 | 22 (15) | 3 (2) | 5 (4) | 2 (2) | 1 (1) | 0 (1) |
| 1500 | 50 (22) | 7 (5) | 2 (3) | 2 (3) | 1 (1) | 0 (0) |

Table 4

| **Effect of GENAPOL C-050 on the performance of dimethomorph EC against P. viticola on "outdoor hardened" vines. (Trial 2)** | | | | | | |
|---|---|---|---|---|---|---|
| ADJUVANT GENAPOL C-050 CONCENTRATION g/ha | % LEAF AREA INFECTED (SD) | | | | | |
| | dimethomorph application rate g/ha | | | | | |
| | 0 | 6.3 | 12.5 | 25 | 50 | 100 |
| 0 | 33 (26) | 43 (29) | 32 (32) | 37 (24) | 22 (13) | 17 (14) |
| 94 | 37 (23) | 11 (8) | 13 (7) | 12 (9) | 15 (9) | 12 (7) |
| 187 | 30 (29) | 15 (8) | 15 (9) | 7 (6) | 9 (6) | 12 (9) |
| 375 | 47 (22) | 16 (16) | 5 (4) | 7 (6) | 6 (5) | 11 (9) |
| 750 | 24 (18) | 9 (7) | 8 (6) | 3 (2) | 2 (2) | 2 (3) |
| 1500 | 36 (15) | 6 (6) | 2 (3) | 2 (3) | 1 (1) | 2 (3) |

Table 5

| **Effect of GENAPOL C-050 on the performance of dimethomorph EC against P. viticola on "outdoor hardened" vines. (Trial 3)** | | | | | |
|---|---|---|---|---|---|
| ADJUVANT GENAPOL C-050 CONCENTRATION g/ha | % LEAF AREA OF SPORULATING LESIONS (SD) | | | | |
| | dimethomorph application rate g/ha | | | | |
| | 0 | 12.5 | 25 | 50 | 100 |
| 0 | 15 (7) | 16 (10) | 16 (14) | 13 (7) | 8 (4) |
| 94 | - | - | - | - | - |
| 187 | - | 6 (3) | 7 (4) | 5 (3) | 9 (4) |
| 375 | 38 (25) | 4 (6) | 2 (2) | 2 (2) | 3 (3) |
| 750 | - | - | - | - | - |

Table 6

| **Effect of GENAPOL C-080 on the performance of dimethomorph EC against P. viticola on "outdoor hardened" vines. (Trial 3)** | | | | | |
|---|---|---|---|---|---|
| ADJUVANT GENAPOL C-080 CONCENTRATION g/ha | % LEAF AREA OF SPORULATING LESIONS (SD) | | | | |
| | dimethomorph application rate g/ha | | | | |
| | 0 | 12.5 | 25 | 50 | 100 |
| 0 | 15 (7) | 16 (10) | 16 (14) | 13 (7) | 8 (4) |
| 94 | - | 9 (6) | 7 (4) | 4 (2) | 3 (3) |
| 187 | - | 3 (2) | 2 (2) | 1 (1) | 1 (1) |
| 375 | - | 1 (1) | 1 (1) | 0 (0) | 1 (1) |
| 750 | 10 (13) | 0 (0) | 1 (1) | 1 (1) | 0 (0) |

Table 7

| **Effect of SILWET L77 on the performance of dimethomorph EC against P. viticola on "outdoor hardened" vines. (Trial 3)** | | | | | |
|---|---|---|---|---|---|
| ADJUVANT SILWET L77 CONCENTRATION g/ha | % LEAF AREA OF SPORULATING LESIONS (SD) | | | | |
| | dimethomorph application rate g/ha | | | | |
| | 0 | 12.5 | 25 | 50 | 100 |
| 0 | 15 (7) | 16 (10) | 16 (14) | 13 (7) | 8 (4) |
| 94 | - | 12 (3) | 7 (3) | 6 (4) | 3 (4) |
| 187 | - | 11 (4) | 9 (8) | 8 (12) | 18 (14) |
| 375 | - | 14 (10) | 6 (3) | 5 (6) | 4 (4) |
| 750 | 14 (9) | 7 (5) | 5 (3) | 1 (1) | 3 (2) |

Example 3

The starting EC composition as described in Example 1 was used.

The adjuvants used were:

GENAPOL C-050 -} described in
GENAPOL C-080 -} Example 2 above
GENAPOL 0-050 -} corresponding to GENAPOL C-series but
GENAPOL O-080 -} having oleyl/$C_{16-18}$ unsaturated alcohol moieties.

The tests were against Plasmopara viticola on glasshouse vines, and substantially corresponded to those described above in Example 1. The results are set out in Tables 8 a), b), c) and d) below.

**Table 8 - Effect of adjuvants on the performance of dimethomorph EC against Plasmopara viticola on Vitus vinifera cv Cabernet Sauvignon**

a) GENAPOL C-050

| GENAPOL C-050 APPLICATION RATE g/ha | % LEAF AREA OF SPORULATING LESIONS (SD) | | | | |
|---|---|---|---|---|---|
| | dimethomorph application rate g/ha | | | | |
| | 0 | 6.3 | 12.5 | 25 | 50 |
| 0 | 91 (16) | 95 (8) | 94 (13) | 95 (12) | 88 (22) |
| 94 | - | 47 (19) | 35 (33) | 24 (26) | 14 (11) |
| 187 | - | 22 (15) | 10 (9) | 19 (24) | 7 (6) |
| 375 | - | 4 (3) | 4 (3) | 3 (7) | 2 (4) |
| 750 | 93 (10) | 6 (7) | 2 (2) | 1 (1) | 1 (1) |

b) <u>GENAPOL C-080</u>

| GENAPOL C-080 APPLICATION RATE g/ha | % LEAF AREA OF SPORULATING LESIONS (SD) | | | | |
|---|---|---|---|---|---|
| | dimethomorph application rate g/ha | | | | |
| | 0 | 6.3 | 12.5 | 25 | 50 |
| 0 | 91 (16) | 95 (8) | 94 (13) | 95 (12) | 88 (22) |
| 94 | - | 51 (20) | 19 (10) | 18 (14) | 10 (10) |
| 187 | - | 35 (36) | 14 (17) | 3 (2) | 7 (9) |
| 375 | - | 27 (26) | 8 (5) | 13 (7) | 4 (3) |
| 750 | 91 (15) | 20 (27) | 3 (3) | 2 (2) | 0 (1) |

c) GENAPOL O-050

| GENAPOL O-050 APPLICATION RATE g/ha | % LEAF AREA SPORULATING LESIONS (SD) | | | | |
|---|---|---|---|---|---|
| | Dimethomorph application rate, g/ha | | | | |
| | 0 | 6.3 | 12.5 | 25 | 50 |
| 0 | 91 (16) | 95 (8) | 94 (13) | 95 (12) | 88 (22) |
| 94 | - | 65 (28) | 48 (34) | 39 (37) | 34 (22) |
| 187 | - | 30 (27) | 15 (22) | 22 (30) | 19 (32) |
| 375 | - | 22 (23) | 8 (9) | 2 (3) | 5 (9) |
| 750 | 89 (5) | 11 (10) | 3 (6) | 11 (16) | 1 (1) |

d) GENAPOL O-080

| GENAPOL O-080 APPLICATION RATE g/ha | % LEAF AREA SPORULATING LESIONS (SD) | | | | |
|---|---|---|---|---|---|
| | Dimethomorph application rate, g/ha | | | | |
| | 0 | 6.3 | 12.5 | 25 | 50 |
| 0 | 91 (16) | 95 (8) | 94 (13) | 95 (12) | 88 (22) |
| 94 | - | 53 (30) | 42 (34) | 41 (25) | 24 (23) |
| 187 | - | 17 (8) | 16 (15) | 11 (7) | 11 (5) |
| 375 | - | 8 (7) | 7 (8) | 12 (5) | 11 (10) |
| 750 | 70 (36) | 4 (5) | 2 (4) | 1 (2) | 0 (0) |

The results indicate that all four adjuvants were extremely effective in enhancing the performance of dimethomorph against downy mildew on the vine variety, Cabernet Sauvignon.

Example 4

Plants

Vine plants (Vitis vinifera cv Cabernet Sauvignon) were propagated under either glasshouse conditions, as described in Example 1, or outdoor conditions, as described in Example 2, but in mid September and early October (mean air temperatures, 16.5°C and 14.5°C respectively). This outdoor conditioning rendered the plants immune to infection of downy mildew by the inoculation procedure. To overcome this immunity, the outdoor conditioned plants were placed in a high humidity room (RH 95-100 %, temperature 22°C) for 4 hours, removed, allowed to dry (~0.5 h) and inoculated immediately. The subsequent treatment was as described previously for the indoor plants, per Example 1.

Materials

Wettable powder (WP) and emulsifiable concentration (EC) formulations of dimethomorph were used per Example 1. The GENAPOL (alcohol ethoxylate), GENAMIN (alkylamine ethoxylate) and EMULSOGEN (castor oil ethoxylate) surfactants were supplied by Hoechst, SILWET L77 (silicone ethoxylate) by Union Carbide and the series of DOBANOL ethoxylates (ethoxylates of mineral oil-derived aliphatic alcohols) by Shell Chemicals U.K., Carrington. Ammonium sulphate was obtained as GPR grade from chemical suppliers.

The GENAPOL T-series is based on tallow oil which typically has the following moieties, by weight:

myristic ($C_{14}$) 2-3 %
palmitic ($C_{16}$) 24-32%
stearic ($C_{18}$) 14-32%

oleic ($C_{18}$, mono-unsaturated) 35-48%
linoleic ($C_{18}$, di-unsaturated) 2-4%.

The nomenclature of the DOBANOL ethoxylates is such that DOBANOL 91, 23, 25 and 45 ethoxylates have $C_{9-11}$, $C_{12-13}$, $C_{12-15}$ and $C_{14-15}$ primary alcohol moieties, whilst the number after the hyphen denotes the average number of ethoxy units per molecule.

Preparation and application of spray solutions

A range of concentrations of either the WP or EC formulations were prepared in tap water and each diluted with an equal volume of water or adjuvant solution to give concentrations of dimethomorph and adjuvant which on spraying, as described in Example 1, at 250 l/ha gave the application rates indicated in the Tables 9-12 below.

Plant treatment, assessment and results

Treatment and assessment was conducted as described previously in Example 1. The results are given in Tables 9-12 below.

The results confirm that GENAPOL C-080 is a superior adjuvant to SILWET L77; that the GENAMIN series are highly effective, apparently comparable in effect to the GENAPOL series, but suffer the disadvantage of causing leaf necrosis, unlike the GENAPOL series; that the GENAPOL T series adjuvants showed good activity , though the higher ethoxylate GENAPOL T800 showed less activity than the 15EO ethoxylate GENAPOL T150; that all the DOBANOL ethoxylates were highly effective; and that the other adjuvants tested showed much lower activity.

Table 9

| Effect of ammonium sulphate and GENAPOL C-080 on the control of P. viticola on outdoor vines by the dimethomorph WP formulation | | | | | | | |
|---|---|---|---|---|---|---|---|
| Adjuvant application rate g/ha | | % Leaf area of sporulating lesions (SD) | | | | | Mean values [(a)] |
| | | dimethomorph application rate g/ha | | | | | |
| Ammonium Sulphate | GENAPOL C-080 | 0 | 6.3 | 12.5 | 25 | 50 | |
| 0 | 0 | 44 (21) | 46 (32) | 36 (7) | 43 (26) | 41 (29) | 40 |
| 500 | 0 | 40 (23) | 50 (28) | 56 (6) | 53 (16) | 71 (16) | |
| 1000 | 0 | 65 (18) | 72 (17) | 79 (8) | 57 (27) | 32 (8) | 56 |
| 1500 | 0 | 43 (14) | 61 (8) | 42 (13) | 64 (42) | 49 (30) | |
| 500 | 94 | - | - | 10 (13) | 7 (8) | 13 (16) | |
| 1000 | 94 | - | - | 12 (17) | 13 (14) | 16 (16) | 11 |
| 1500 | 94 | - | - | 14 (14) | 6 (7) | 6 (6) | |
| 500 | 187 | - | - | 3 (4) | 6 (9) | 4 (3) | |
| 1000 | 187 | - | - | 7 (8) | 10 (11) | 9 (15) | 6 |
| 1500 | 187 | - | - | 5 (2) | 4 (10) | 3 (2) | |
| 0 | 375 | 57 (7) | 9 (5) | 5 (7) | 6 (7) | 0 (0) | 4 |
| 0 | 750 | 82 (18) | 3 (4) | 7 (8) | 2 (3) | 1 (1) | 3 |

(a) Over the dimethomorph dose range 12.5 to 50 g/ha.

Table 10

| Effect of SILWET L77 and GENAPOL C-080 on the control of P. viticola on outdoor vines by the dimethomorph EC formulation. | | | | | | | |
|---|---|---|---|---|---|---|---|
| Adjuvant application rate g/ha | | % Leaf area of sporulating lesions (SD) | | | | | |
| GENAPOL C-080 | SILWET L77 | dimethomorph application rate, g/ha | | | | | |
| | | 0 | 6.3 | 12.5 | 25 | 50 | 25[(a)] |
| 0 | 0 | 23 (18) | 36 (19) | 27 (11) | 40 (28) | 25 (11) | 69 (12) |
| 0 | 94 | - | 34 (16) | 16 (11) | 13 (15) | 14 (6) | 29 (15) |
| 0 | 187 | - | 8 (5) | 16 (10) | 2 (4) | 5 (5) | 18 (20) |
| 0 | 375 | - | 16 (19) | 9 (8) | 10 (9) | 2 (2) | 21 (13) |
| 94 | 0 | 37 (15) | 9 (7) | 25 (22) | 26 (17) | 15 (23) | 15 (15) |
| 187 | 0 | 33 (26) | 12 (16) | 8 (6) | 8 (12) | 5 (5) | 4 (2) |
| 375 | 0 | - | 4 (5) | 3 (3) | 6 (5) | 5 (8) | 1 (2) |
| 94 | 94 | - | 17 (11) | 15 (12) | 11 (12) | 14 (7) | 15 (15) |
| 94 | 187 | - | 9 (8) | 23 (10) | 24 (17) | 10 (9) | 6 (7) |
| 187 | 94 | - | 7 (3) | 11 (6) | 3 (4) | 13 (17) | 4 (3) |
| 187 | 187 | - | 21 (16) | 9 (4) | 9 (6) | 5 (6) | 9 (11) |

(a) Glasshouse grown vines treated at the same time.

Table 11

| Effect of further adjuvants on the control of P. viticola on glasshouse vines by the dimethomorph EC | | | | | | |
|---|---|---|---|---|---|---|
| Adjuvant (appln. rate 500 g/ha) | % Leaf area of sporulating lesions (SD) | | | | | Mean phytotoxicity |
| | dimethomorph application rate g/ha | | | | | |
| | 0 | 6.3 | 12.5 | 25 | 50 | |
| None | 19 (7) | 19 (17) | 18 (4) | 21 (17) | 24 (14) | 0 |
| GENAMIN C-020 | - | 1 (2) | 0 (0) | 0 (0) | 0 (0) | 5 |
| GENAMIN C-050 | - | 2 (2) | 2 (3) | 2 (2) | 1 (1) | 2.5 |
| GENAMIN C-100 | - | 8 (5) | 2 (2) | 3 (3) | 2 (4) | 1.7 |
| GENAMIN C-200 | - | 4 (4) | 5 (5) | 3 (3) | 3 (3) | 0.7 |
| EMULSOGEN EL | - | 7 (3) | 9 (6) | 6 (4) | 14 (7) | 0 |
| EMULSOGEN EL400 | 22 (14) | 11 (7) | 19 (12) | 13 (8) | 19 (7) | 0 |
| GENAPOL T-150 | - | 2 (2) | 1 (1) | 0 (0) | 0 (0) | 0 |
| GENAPOL T-800 | - | 19 (8) | 16 (7) | 25 (14) | 12 (6) | 0 |
| GENAPOL C-O50 | 12 (12) | 1 (1) | 1 (1) | 2 (3) | 1 (2) | 0 |
| GENAPOL C-080 | 14 (5) | 2 (2) | 0 (0) | 1 (1) | 1 (2) | 0 |

Table 12

| Effect of further adjuvants on the control of P. viticola on glasshouse vines by the dimethomorph EC | | | | | |
|---|---|---|---|---|---|
| Adjuvant (appln. rate 500 g/ha) | % Leaf area of sporulating lesions (SD) | | | | |
| | dimethomorph application rate g/ha | | | | |
| | 0 | 6.3 | 12.5 | 25 | 50 |
| None | 25 (21) | 29 (16) | 55 (28) | 40 (30) | 56 (22) |
| GENAPOL C-050 | 38 (22) | 7 (7) | 1 (1) | 1 (2) | 2 (2) |
| GENAPOL C-080 | 54 (23) | 9 (7) | 4 (3) | 1 (2) | 1 (1) |
| GENAPOL T-110 | - | 6 (8) | 4 (4) | 5 (6) | 3 (4) |
| GENAPOL T-250 | - | 23 (17) | 22 (14) | 41 (35) | 15 (8) |
| DOBANOL ethoxylate 91-5 | 43 (42) | 5 (5) | 7 (4) | 3 (3) | 1 (2) |
| DOBANOL ethoxylate 91-8 | - | 3 (3) | 4 (6) | 1 (2) | 1 (4) |
| DOBANOL ethoxylate 23-6.5 | - | 4 (4) | 5 (3) | 1 (1) | 2 (3) |
| DOBANOL ethoxylate 25-7 | - | 4 (4) | 1 (1) | 1 (1) | 7 (6) |
| DOBANOL ethoxylate 25-9 | - | 2 (2) | 1 (2) | 3 (7) | 0 (1) |
| DOBANOL ethoxylate 45-7 | 39 (22) | 6 (4) | 2 (3) | 0 (0) | 0 (0) |

Example 5

Materials

The starting WP composition described in Example 1 was used.
The following adjuvants were used:

- GENAPOL C-050, C-080, as described above
- GENAPOL C-100, C-200 (average 10 and 20EO units per molecule respectively; alcohol derived from coconut oil)
- ARKOPAL N060, N100, N150, N230 (C9 alkyl phenol ethoxylates from Hoechst).
- SILWET L77, as described above
- AEROSOL OTB (a sodium sulphosuccinate, from Cyanamid)
- ARMOBLEN 557 (an alkylamine ethoxylate/propoxylate, from Akzo).

Plants

Potato plants (Solanum tuberosum cv Desiree) were propagated from tuber cuttings in a sterilised loam compost, amended with peat, and grown to the 5/6 leaf stage under growth room conditions (temperature, 10°C; lighting, 12 h photoperiod under lamps of 125 W cool white fluorescent tubes giving 155 µmol/$m^2$/s in the PAR range of 400 to 700 nm).

The apices and any side shoots of the plants were removed to leave plants with three well-developed leaves. These leaves were inoculated by spraying the adaxial surface with a suspension of Phytophthora infestans (late blight), obtained from either tomato or potato hosts. The inoculated plants were transferred to a high humidity chamber (17°C) for 17 to 20 h before being removed and the leaves allowed to dry (1 to 2 h) before spraying.

Preparation and application of spray solution

Amounts (0.8, 0.4, 0.2, 0.1, 0.05, 0 g) of the WP were dispersed into tap water (250 ml). An amount (1.6 g) of each adjuvant was dissolved in tap water (200 ml). An aliquot of each dimethomorph dispersion was mixed with an equal aliquot of water and each adjuvant solution prior to spraying to give an array of 36 dispersions for the first trial and 42 dispersions for the second.

Each of these prepared dispersions was sprayed onto four potato plants placed in a tray at a nominal volume rate equivalent to 250 l/ha using a laboratory track sprayer equipped with an 8002E hydraulic nozzle (Spraying Systems Co.,

Illinois) operating at 276 kPa. These treatments were equivalent to dimethomorph application rates of 200, 100, 50, 25, 12.5, 0 g/ha either without or with adjuvant at an application rate equivalent to 1kg/ha.

Plant treatment and assessment

The spray deposits were allowed to dry and the plants returned to a growth room (temperature, 17°C; lighting 16 h photoperiod under sodium lamps (250 W Sont GEC Solarcolor) giving 155 µmol/m2/s in the PAR 400 to 700 nm; relative humidity ~70 %) and placed on sub-irrigation matting for 3 days. They were then transferred to a high humidity room (23°C) for 24 h incorporating a dark period of 8 h. Each inoculated leaf was assayed for infection by visual assessment of the % leaf area infected.

A two-way analysis of variance was performed on the data to assess if there were significant differences in performance between the adjuvants followed by a studentised range test to give a statistical ranking of the adjuvants.

Results

Mean values of the % area of infection of Phytophthora infestans in the twelve replicate potato leaves, together with the standard deviations for the two trials, are given in Table 13. The standard deviations are a high proportion of the mean values in all cases, indicating that variation was high for all treatments except when good control was obtained. This innate variation is a feature of this disease on this species.

Variation can sometimes obscure dose responses and make it difficult to make judgements on differences between treatments. Nevertheless, it is clear that the WP formulation of dimethomorph has little therapeutic effectiveness against P. infestans on potatoes.

However, it is clear from the data in Table 13 that with adjuvants in the spray dilutions dimethomorph can give therapeutic control of one day old infections of P. infestans. SILWET L77 gave enhancement in the performance of dimethomorph but the results with the GENAPOL series were much more striking.

Table 13

| **Effect of adjuvants in enhancing the therapeutic performance of dimethomorph WP formulation against 1 day old infections of P. infestans on potato** | | | | | | |
|---|---|---|---|---|---|---|
| ADJUVANT[a] | % LEAF AREA INFECTED[b] (SD) | | | | | |
| | dimethomorph application rate g/ha | | | | | |
| | 0 | 12.5 | 25 | 50 | 100 | 200 |
| NONE | 50 (29) | 61 (30) | 60 (30) | 56 (23) | 63 (26) | 41 (24) |
| SILWET L77 | 59 (23) | 33 (30) | 10 (7) | 10 (8) | 9 (7) | 14 (10) |
| GENAPOL C-200 | 44 (24) | 12 (10) | 12 (9) | 8 (7) | 4 (4) | 4 (6) |
| GENAPOL C-100 | 38 (17) | 7 (9) | 5 (6) | 1 (1) | 2 (4) | 4 (5) |
| GENAPOL C-080 | 47 (21) | 6 (8) | 2 (3) | 2 (4) | 0 (1) | 0 (0) |
| GENAPOL C-050 | 30 (14) | 9 (9) | 5 (8) | 1 (3) | 4 (5) | 2 (4) |

a) Adjuvant application rate equivalent to 1 kg/ha
b) Mean values of 12 replicate leaves.

The results (Table 14) of a second test involving examination of the effectiveness of a range of alkylaryl ethoxylates (ARKOPAL series), sodium sulphosuccinate (AEROSOL OTB) and an alkylamine ethoxylate/propoxylate (ARMOBLEN 557) indicated that some of these adjuvants were also active but none appeared to be as effective as the GENAPOL series.

Table 14

| Effect of adjuvants in enhancing the therapeutic performance of dimethomorph WP formulation against 1 day old infections of P. infestans on potato | | | | | | |
|---|---|---|---|---|---|---|
| ADJUVANT[a)] | % LEAF AREA INFECTED[b)] (SD) | | | | | |
| | dimethomorph application rate g/ha | | | | | |
| | 0 | 12.5 | 25 | 50 | 100 | 200 |
| NONE | 42 (27) | 32 (21) | 34 (29) | 33 (26) | 29 (36) | 49 (39) |
| ARKOPAL N060 | 27 (23) | 18 (13) | 11 (9) | 15 (15) | 19 (21) | 18 (14) |
| ARKOPAL N100 | 45 (40) | 56 (29) | 28 (22) | 20 (18) | 4 (6) | 29 (22) |
| ARKOPAL N150 | 70 (28) | 30 (27) | 26 (21) | 16 (8) | 18 (18) | 6 (7) |
| ARKOPAL N230 | 44 (31) | 44 (31) | 26 (18) | 22 (22) | 21 (24) | 36 (29) |
| AEROSOL OTB | 53 (25) | 49 (27) | 59 (33) | 63 (22) | 46 (22) | 41 (29) |
| ARMOBLEN 557 | 47 (24) | 30 (23) | 30 (29) | 39 (26) | 38 (23) | 16 (24) |

a) Adjuvant application rate equivalent to 1 kg/ha
b) Mean values of 12 replicate leaves.

Example 6

The starting WP composition as described in Example 1 was used.
The adjuvants used were

GENAPOL C-080 } described previously
ARKOPAL N150

BRIJ 98 - an oleyl alcohol ethoxylate, having an average 20 ethylene units per molecule, from ICI.

Emulsified paraffinic oil.

The tests, on potato plants infected with P. infestans, and the assessments, were as described with reference to Example 5. The results are presented in Table 15 below.

Table 15

| Effect of adjuvants on the therapeutic performance of dimethomorph WP formulation against 1 day old infections of P. infestans on potato | | | | | | |
|---|---|---|---|---|---|---|
| ADJUVANT | ADJUVANT APPLICATION RATE g/ha | % Leaf area infected[a] (SD) | | | | |
| | | dimethomorph application rate g/ha | | | | |
| | | 0 | 25 | 50 | 100 | 200 |
| NONE | - | 60 (37) | 51 (25) | 49 (33) | 74 (31) | 69 (16) |
| Emulsified paraffinic oil | 750 | - | 47 (34) | 20 (17) | 16 (18) | 5 (5) |
| | 1500 | 65 (28) | 9 (8) | 7 (11) | 5 (7) | 4 (6) |
| BRIJ 98 | 750 | - | 16 (19) | 16 (19) | 8 (9) | 23 (10) |
| | 1500 | 21 (20) | 9 (9) | 6 (7) | 4 (6) | 2 (4) |
| ARKOPAL N150 | 750 | - | 27 (23) | 25 (19) | 25 (16) | 15 (9) |
| | 1500 | - | 31 (25) | 11 (16) | 7 (9) | 5 (5) |
| GENAPOL C-080 | 750 | - | 9 (9) | 9 (25) | 6 (8) | 4 (6) |
| | 1500 | - | 9 (11) | 2 (4) | 4 (7) | 0 (1) |

a) Mean values of 12 replicate leaves.

Example 7

In this test, the effect of GENAPOL C-080 as an adjuvant in dimethomorph/mancozeb compositions was assessed, in relation to the therapeutic control of Phytophthora infestans in potato plants. A dimethomorph/mancozeb WP composition (75 g/kg / 600 g/kg) was prepared by air milling the following ingredients together to obtain an average particle size of around 5 µm:

dimethomorph 75 g
PENNCOZEB PREMIX 85, 705.9 g
BORROSPERSE CA 50g
SUPRAGIL WP 20 g
Kaolin to 1 kg.

PENNCOZEB PREMIX 85 is an 88-87% m/m formulation of mancozeb, from Pennwalt.

Potato plants were propagated and inoculated for 1 day old infections as described in Example 5.

Spraying and assessment was similar to that described in Example 5; spray solution compositions are given in Table 16 below.

Table 16 shows the results against the 1 day old infections.

It will be seen from Table 16 that GENAPOL C-080/dimethomorph and GENAPOL C-080/dimethomorph/mancozeb compositions give effective therapeutic activity.

Table 16

| Effect of GENAPOL C-080 on the performance of various WP formulations against 1 day old infections of Phytophthora infestans on potatoes | | | | | | |
|---|---|---|---|---|---|---|
| Formulation | GENAPOL C-080 APPLN. RATE g/ha | % LEAF AREA INFECTED (SD) | | | | |
| | | Active ingredient application rate g/ha | | | | |
| | | 0 | 25 | 50 | 100 | 200 |
| dimethomorph WP of Example 1 | 0 | 90 (18) | 97 (8) | 81 (27) | 54 (38) | 61 (39) |
| | 750 | - | - | - | 13 (16) | 4 (5) |
| | 1500 | - | 2 (4) | 3 (3) | 1 (2) | 1 (2) |
| dimethomorph/mancozeb WP | 0 | 79 (25) | 65 (36) | 66 (32) | 30 (43) | 68 (28) |
| | 750 | - | - | - | 20 (21) | 19 (11) |
| | 1500 | - | 7 (6) | 2 (3) | 2 (4) | 3 (5) |

Example 8

In this test, various adjuvants/dimethomorph compositions were tested against Phytophthera infestans infections of potato plants, in accordance with the method of Example 5.

The following adjuvants were used:
Codacide oil, an emulsified vegetable oil
LI 700, a phospholipid suspension of lecithin from soya beans, and proprionic acid from Newman Agrochemicals NONIDET PS 30 (30% aqueous solution of DOBANOL 25-9)
DOBANOL 91-8
DOBANOL 25-7.

The results are presented in Table 17 below.

Table 17

| Effect of adjuvants on the efficacy of dimethomorph WP formulation in controlling P. infestans on potatoes | | | | | | |
|---|---|---|---|---|---|---|
| ADJUVANT | Appln. rate g/ha | % leaf area infected (SD) | | | | |
| | | dimethomorph appln. Rate g/ha | | | | |
| | | 0 | 25 | 50 | 100 | 200 |
| NONE | - | 56 (28) | 43 (21) | 59 (24) | 40 (24) | 51 (18) |
| CODACIDE OIL | 750 | - | - | 53 (29) | 37 (26) | 35 (20) |
| CODACIDE OIL | 1500 | - | 35 (23) | 27 (15) | 37 (21) | 27 (9) |
| LI 700 | 750 | - | - | 36 (21) | 51 (20) | 50 (34) |
| LI 700 | 1500 | - | 42 (26) | 31 (17) | 38 (21) | 35 (16) |
| NONIDET PS30 | 750 | - | - | 33 (20) | 30 (21) | 43 (15) |
| NONIDET PS30 | 1500 | - | 15 (15) | 16 (11) | 12 (6) | 21 (12) |
| DOBANOL 91-8 | 750 | - | - | 15 (14) | 10 (9) | 25 (17) |
| DOBANOL 91-8 | 1500 | - | 6 (7) | 7 (10) | 5 (4) | 8 (8) |
| DOBANOL 25-7 | 750 | - | - | 4 (5) | 1 (3) | 3 (5) |
| DOBANOL 25-7 | 1500 | - | 4 (6) | 1 (2) | 1 (2) | 1 (3) |

Example 9

In this test, the curative activity of dimethomorph used in conjunction with various free or alkyl-terminated aliphatic alcohol ethoxylates was assessed in respect of Plasmopara viticola on vine plants.

The following aliphatic alcohol ethoxylates were used:

DOBANOL 25-9, as described above
DOBANOL 91-5, as described above
DOBANOL 91-6, as described above
DOBANOL 91-8, as described above

DEHYDOL G 202, an ethoxylated branched fatty alcohol having 20 carbon atoms deriving from the alcohol moiety, and 2 ethylene oxide units:

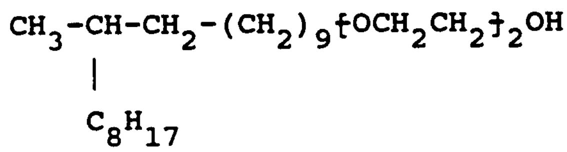

DEHYDOL G 205, as DEHYDOL G 202 but with 5 ethylene oxide units:

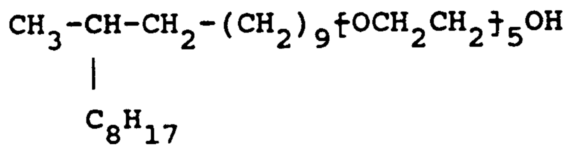

DEHYDOL D3, an ethoxylated linear fatty alcohol having 10 carbon atoms deriving from the alcohol moiety, and 3 ethylene oxide units:

$$CH_3\text{-}(CH_2)_9[OCH_2CH_2]_3OH$$

DEHYDOL 04, an ethoxylated linear fatty alcohol having 8 carbon atoms deriving from the alcohol moiety, and 5 ethylene oxide units:

$$CH_3\text{-}(CH_2)_7[OCH_2CH_2]_5OH$$

DEHYDOL 04 DEO, as DEHYDOL 04 but has undergone distillation to remove trace amounts of non-ethoxylated alcohol

DEHYPON G 2084, a butyl-terminated branched fatty alcohol ethoxylate, the alcohol moiety containing 20 carbon atoms, having 8 ethylene oxide units

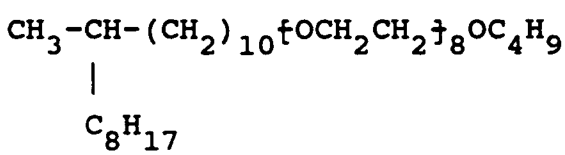

For each trial, each adjuvant was formulated as EC formulations in an amount of 100 g/l and then added to a dimethomorph DC formulation containing 150 g/l of the dimethomorph active ingredient, in a ratio of 1 part adjuvant EC to 3 parts dimethomorph DC. Three dimethomorph/adjuvant combinations were tested 1.6 ppm:4.7 ppm; 6.3 ppm:19 ppm; and 25 ppm:75 ppm.

Vine cuttings (cultivar Müller-Thurgau) cut in late winter were placed into trays for sprouting and rooting and then, after 6 weeks, were put into 8 cm diameter pots. The cuttings were then grown for 3 to 5 weeks in a glasshouse during which they were treated weekly against P. viticola infection with triforine, and twice weekly fertilizer was applied.

Whilst sprouting, daytime temperature was maintained at 25°C and night-time temperature at 20°C. In the testing phase the night-time temperature was increased to 25°C, and the plants were kept moist using an air moistener during the nights.

Per test, 4 vine plants in the 5 to 6 leaf stage, cut to 3 faultless leaves, were sprayed with suspension of P. viticola sporangia (circa 200,000 sporangia per ml) from the underside of the leaves, and incubated in a dark humid chamber

at 20°C for 2 days. After drying, the plants were sprayed with the test formulation (20 ml per 4 plants) so that a uniform spray wash film without run-off was achieved. After drying, the plants were placed in a glasshouse for 6 days.

For assessment, the area covered by fungal infection on the underside of the leaves was estimated, the values compared with an untreated control and the percentage activity calculated using the formula:

$$\% \text{ activity} = 100 - \frac{100 \times \% \text{ infection in treated}}{\% \text{ infection in control}}$$

The results are given in Table 18 below, as the mean of four trials carried out for each test formulation. The untreated control was 80% infected by P. viticola.

The dimethomorph DC and adjuvant EC formulations were prepared from the following ingredients combined in conventional manner for a dispersible concentrate (DC) and emulsifiable concentrate (EC) respectively.

| DC | | EC | |
|---|---|---|---|
| Dimethomorph | 150g | Adjuvant | 100g |
| SOPROPHOR FL | 100g | TWEEN 20 | 100g |
| Benzyl alcohol | to 1 l | Isopropyl alcohol | 100g |
| | | Water | to 1 l |

SOPROPHOR FL is a polyethoxylated polyarylphenol phosphate, neutralised, available from Rhone-Poulenc; TWEEN 20 is a polyoxyethylene (20) sorbitan monolaurate surfactant available from ICI or Aldrich Chemical Company Limited.

From the results it is clear that the enhancement shown by alcohol alkoxylate adjuvants in dimethomorph WP and EC compositions can also be given with DC formulations; it is also clear that the curative action of dimethomorph can be enhanced by alcohol alkoxylates in addition to the therapeutic action. This enhancement can be seen particularly with the 25:75 dimethomorph adjuvant formulation.

Table 18

| Curative activity of dimethomorph and adjuvants against P. viticola on vine | | | |
|---|---|---|---|
| ADJUVANT | CONCENTRATON /ppm DIMETHOMORPH:ADJUVANT | | |
| | 1.6:4.7 | 6.3:19 | 25:75 |
| NONE* | 11 | 39 | 49 |
| DOBANOL 25-9 | 24 | 37 | 81 |
| DOBANOL 91-5 | 20 | 39 | 78 |
| DOBANOL 91-6 | 18 | 37 | 78 |
| DOBANOL 91-8 | 18 | 41 | 78 |
| DEHYDOL G 202 | 10 | 44 | 85 |
| DEHYDOL G 205 | 21 | 49 | 85 |
| DEHYDOL D 3 | 19 | 37 | 77 |
| DEHYDOL 04 | 12 | 35 | 82 |
| DEHYDOL 04 DEO | 20 | 38 | 79 |
| DEHYPON G 2084 | 18 | 41 | 94 |

* results given are for concentratons of 1.6, 6.3 and 25 ppm dimethomorph DC.

Example 10 - one-pack formulations

As a result of tests described above and conclusions drawn as to the desirable relative proportions of dimethomorph and alcohol ethoxylate adjuvant, the following preferred liquid and solid one-pack dimethomorph/adjuvant formulations, for dilution with water, were proposed.

| Liquid | Solid |
|---|---|
| dimethomorph 5-100 g/l | dimethomorph 5-200 g/kg |
| DOBANOL ethoxylate 100-500 g/l | DOBANOL ethoxylate 100-500 g/kg |
| emulsifier 30-100 g/l | wetting agent to aid |
| solvent (e.g. benzyl alcohol to 1 l) | dispersion 5-50 g/kg filler (eg kaolin) to 1kg |

It should be noted that the use of capital letters in this specification to denote terms for materials indicates that those terms are, or are thought to be, trade marks.

It should be noted that the information which has been provided about the chemical constitution of the various materials designated by trade marks has been provided on the basis of common knowledge, and, where available, manufacturers' or distributors' information.

**Claims**

1. A fungicidal composition comprising an aliphatic alcohol alkoxylate or an alkyl-terminated aliphatic alcohol alkoxylate, and a compound of general formula

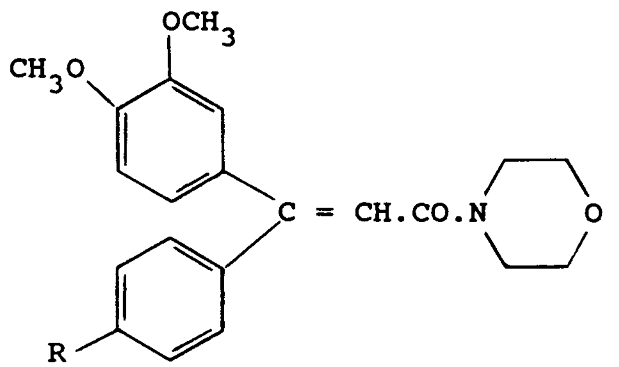

(I)

wherein R represents a halogen atom, an alkyl group or a halophenoxy group.

2. A composition as claimed in claim 1, wherein the alkoxylate comprises from 2 to 9 alkoxy moieties.

3. A composition as claimed in claim 1 or claim 2, wherein the alkoxylate is an ethoxylate or a mixed ethoxylate/propoxylate.

4. A composition as claimed in any one of the preceding claims, wherein the aliphatic alcohol is a $C_{9-20}$ aliphatic alcohol.

5. A composition as claimed in any one of the preceding claims, further comprising mancozeb.

6. A composition as claimed in any one of the preceding claims, wherein R represents a chlorine atom.

7. A fungicidal composition as claimed in any of one of the preceding claims, being a concentrate formulation for addition to water, and containing in the range of from 5 to 200 g/kg of a compound of general formula I, and in the range of from 100 to 500 g/kg of a free or alkyl-terminated aliphatic alcohol alkoxylate.

8. A method of combating a fungus at a locus, which method comprises treating the locus with a composition which contains a compound of general formula I, as defined in claim 1, and an aliphatic alcohol alkoxylate, or an alkyl-terminated aliphatic alcohol alkoxylate.

9. A method as claimed in claim 8, wherein a compound of general formula I is applied to the locus in an amount in the range of from 50 to 300 g/ha, and the alkoxylate in an amount in the range of from 300 to 1500 g/ha.

10. A method as claimed in claim 9, wherein the composition is as claimed in claim 5, and the mancozeb is co-applied to the locus in an amount in the range of from 50 to 300 g/ha.

11. Use as a fungicide of a composition as claimed in any of claims 1 to 7.

**Patentansprüche**

1. Fungizide Zusammensetzung, umfassend ein Alkoxylat eines aliphatischen Alkohols oder ein Alkyl-Endgruppen aufweisendes Alkoxylat eines aliphatischen Alkohols sowie eine Verbindung der allgemeinen Formel

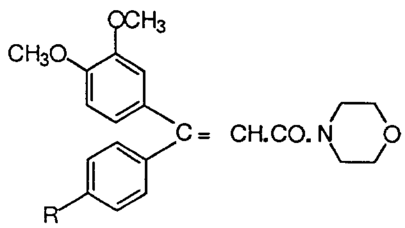

(I)

worin R ein Halogenatom, eine Alkylgruppe oder eine Halogenphenoxygruppe repräsentiert.

2. Zusammensetzung nach Anspruch 1, worin das Alkoxylat 2 bis 9 Alkoxygruppen umfaßt.

3. Zusammensetzung nach Anspruch 1 oder 2, worin das Alkoxylat ein Ethoxylat oder ein gemischtes Ethoxylat/Propoxylat ist.

4. Zusammensetzung nach einem der vorhergehenden Ansprüche, worin der aliphatische Alkohol ein aliphatischer $C_{9-20}$-Alkohol ist.

5. Zusammensetzung nach einem der vorhergehenden Ansprüche, die weiter Mancozeb umfaßt.

6. Zusammensetzung nach einem der vorhergehenden Ansprüche, worin R ein Chloratom repräsentiert.

7. Fungizide Zusammensetzung nach einem der vorhergehenden Ansprüche, die eine Konzentrat-Formulierung für eine Zugabe zu Wasser ist und im Bereich von 5 bis 200 g/kg einer Verbindung der allgemeinen Formel I und im Bereich von 100 bis 500 g/kg eines freien oder Alkyl-Endgruppen aufweisenden Alkoxylats eines aliphatischen Alkohols enthält.

8. Verfahren zum Bekämpfen eines Pilzes an einem Ort, wobei das Verfahren das Behandeln des Ortes mit einer Zusammensetzung umfaßt, die eine Verbindung der allgemeinen Formel I, wie sie in Anspruch 1 definiert ist, und ein Alkoxylat eines aliphatischen Alkohols oder ein Alkyl-Endgruppen aufweisendes Alkoxylat eines aliphatischen Alkohols enthält.

9. Verfahren nach Anspruch 8, worin eine Verbindung der allgemeinen Formel I in einer Menge im Bereich von 50 bis 300 g/ha und das Alkoxylat in einer Menge im Bereich von 300 bis 1.500 g/ha, auf den Ort aufgebracht wird.

10. Verfahren nach Anspruch 9, worin die Zusammensetzung wie in Anspruch 5 beansprucht ist, und das Mancozeb in einer Menge im Bereich von 50 bis 300 g/ha gemeinsam auf den Stelle aufgebracht werden.

11. Verwendung einer Zusammensetzung nach einem der Ansprüche 1 bis 7 als ein Fungizid.

## Revendications

1. Composition fongicide comprenant un alkylate d'alcool aliphatique ou un alkylate d'alcool aliphatique à terminaison alkyle, et un composé de formule générale :

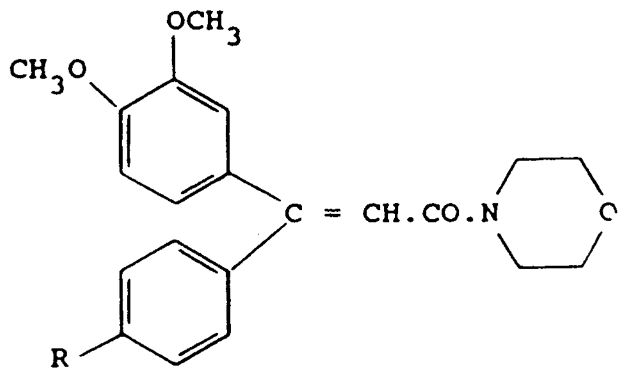

(I)

dans laquelle R représente un atome d'halogène, un groupe alkyle ou un groupe halogénophénoxy.

2. Composition selon la revendication 1, dans laquelle l'alkylate comprend de 2 à 9 groupes alkoxy.

3. Composition selon la revendication 1 ou 2, dans laquelle l'alkylate est un éthylate ou un éthylate/propylate mixte.

4. Composition selon l'une quelconque des revendications précédentes, dans laquelle l'alcool aliphatique est un alcool aliphatique en $C_9$ à $C_{20}$.

5. Composition selon l'une quelconque des revendications précédentes, comprenant en outre du mancozeb.

6. Composition selon l'une quelconque des revendications précédentes, dans laquelle R représente un atome de chlore.

7. Composition fongicide selon l'une quelconque des revendications précédentes, consistant en une composition concentrée destinée à être ajoutée dans de l'eau, et contenant de 5 à 200 g/kg de composé de formule générale I, et de 100 à 500 g/kg d'un alkylate d'alcool aliphatique à terminaison alkyle ou libre.

8. Procédé pour lutter contre un champignon en un lieu, selon lequel on traite le lieu avec une composition contenant un composé de formule générale I tel que défini dans la revendication 1, et un alkylate d'alcool aliphatique ou un alkylate d'alcool aliphatique à terminaison alkyle.

9. Procédé selon la revendication 8, dans lequel le composé de formule générale I est appliqué sur le lieu, selon une quantité de 50 à 300 g/ha, et l'alkylate selon une quantité de 300 à 1 500 g/ha.

10. Procédé selon la revendication 9, dans lequel la composition est telle que revendiquée dans la revendication 5, et le mancozeb est simultanément appliqué sur le lieu, selon une quantité de 50 à 300 g/ha.

11. Utilisation comme fongicide, d'une composition selon l'une quelconque des revendications 1 à 7.